Europäisches Patentamt

European Patent Office

Office européen des brevets

(19)

(11) Numéro de publication: **0 256 945**
**B1**

(12) **FASCICULE DE BREVET EUROPEEN**

(45) Date de publication du fascicule du brevet:
02.08.89

(51) Int. Cl.⁴: **C10G 45/64,** B01J 29/20,
B01J 37/24

(21) Numéro de dépôt: 87401858.3

(22) Date de dépôt: 10.08.87

(54) Catalyseur à base de mordénite pour l'isomérisation de paraffines normales.

(30) Priorité: 13.08.86 FR 8611795

(43) Date de publication de la demande:
24.02.88 Bulletin 88/8

(45) Mention de la délivrance du brevet:
02.08.89 Bulletin 89/31

(84) Etats contractants désignés:
AT BE CH DE ES FR GB GR IT LI LU NL SE

(56) Documents cités:
EP-A- 0 091 076
FR-A- 2 234 038
US-A- 4 273 753
US-A- 4 400 576

(73) Titulaire: INSTITUT FRANCAIS DU PETROLE, 4, Avenue
de Bois-Préau, F-92502 Rueil-Malmaison(FR)

(72) Inventeur: Travers, Christine, 12, Bd du Général De
Gaulle, F-92500 Rueil-Malmaison(FR)
Inventeur: Bournonville, Jean-Paul, 43, rue des Groues
Vauréal, F-95000 Cergy-Pontoise(FR)
Inventeur: Franck, Jean-Pierre, 24, avenue Ivan
Tourgueneff, F-78300 Bougival(FR)

ACTORUM AG

## Description

La présente invention concerne un procédé de préparation d'un catalyseur comprenant une mordénite sous forme acide et au moins un métal du group VIII de la classification périodique des éléments, présentant une activité accrue, ainsi que son utilisation dans diverses réactions de conversion d'hydrocarbures et en particulier pour l'isomérisation des paraffines normales.

La présente invention concerne également le catalyseur obtenu par ledit procédé ainsi qu'un procédé d'hydroisomérisation de paraffines normales contenues dans une coupe d'hydrocarbures riche en paraffines normales, ayant par exemple de 4 à 7 atomes de carbone par molécule, en présence dudit catalyseur. L'isomérisation des paraffines normales, de faible poids moléculaire, est d'une importance considérable dans l'industrie pétrolière vu l'indice d'octane particulièrement élevé des isoparaffines formées.

Les modifications des législations des principaux pays industrialisés, en ce qui concerne les normes de qualité des essences automobiles et la suppression progressive de l'autorisation d'utiliser des additifs à base de plomb, conduisent les producteurs de ces produits à rechercher des procédés améliorés permettant d'obtenir des essences automobiles, sans plomb, à haut indice d'octane. Les procédés permettant de transformer les paraffines normales ayant par exemple 4, 5, 6 ou 7 atomes de carbone par molécule, et en particulier les n-paraffines à 5 et 6 atomes de carbone par molécule, en un produit contenant une proportion élevée d'isoparaffines sont particulièrement intéressants.

Ces procédés permettent, en particulier, d'améliorer l'indice d'octane des fractions d'essence légère telles que celles issues, par exemple, du réformage catalytique ou de la distillation directe. Le mécanisme de la réaction d'hydroisomérisation est habituellement considéré comme un mécanisme bifonctionnel pour lequel il est préférable d'utiliser des catalyseurs comportant à la fois des sites acides et des sites ayant une fonction hydrogénante/déshydrogénante.

Depuis une vingtaine d'années de très nombreuses publications mentionnent l'utilisation, dans les procédés d'hydroisomérisation, de catalyseurs à base de zéolithes modifiées plus ou moins profondément, et en particulier de mordénites usuellement sous forme acide, avec un promoteur d'hydrogénation. On peut en particulier citer les brevets de la Société SHELL utilisant des catalyseurs à base de mordénites modifiées selon des procédés particuliers : US-A-3,842,114, US-A-4,359,409 et US-A-4,400,576.

On peut également citer les brevets de la Société ESSO utilisant des mordénites désaluminées partiellement : US-A-3,480,539 et US-A-3,506,400, et un brevet de la Société MOBIL US-A-3,551,353.

Un des objets de la présente invention est un procédé amélioré d'hydroisomérisation d'une coupe d'hydrocarbures, riche en n-paraffines ayant par exemple de 4 à 7 atomes de carbone par molécule, et de préférence 5 et/ou 6 atomes de carbone par molécule, en présence d'un catalyseur amélioré renfermant au moins un métal du groupe VIII, et de préférence du platine, du palladium ou du nickel, supporté par une mordénite sous forme acide.

L'efficacité du catalyseur dépend en particulier de la bonne dispersion du métal sur la mordénite sous forme acide. Il est ainsi souhaitable d'avoir la plus grande dispersion possible du métal sur la mordénite, de manière à ce que le maximum d'atomes de métal soient accessibles aux réactifs. La taille des cristallites métalliques doit être faible, de préférence inférieure ou égale à environ $10 \times 10^{-10}$m (10 Angstroms), et leur répartition la plus homogène possible.

Actuellement, dans le cas des catalyseurs à base de mordénite sous forme acide, il est très difficile, par les techniques classiques d'imprégnation, d'obtenir directement des particules métalliques, de petite taille, bien réparties sur la mordénite.

On a découvert, selon l'invention, que si l'on fait subir au solide, à base de mordénite sous forme acide contenant au moins un métal du groupe VIII, un traitement d'oxychloration, dans des conditions modérées ne modifiant pas la structure de la mordénite, la dispersion du métal du groupe VIII est très nettement améliorée ce qui permet d'obtenir un catalyseur particulièrement actif, en particulier pour la réaction d'isomérisation.

La mordénite est un aluminosilicate naturel ou synthétique caractérisé par un rapport atomique Si/Al compris généralement entre 4 et 6 ; sa structure cristalline est constituée d'enchainements de tétraèdres de base $SiO_4$ et $AlO_4$, générateurs de deux types de canaux : des canaux à ouverture dodécagonale (contour à 12 oxygènes) et des canaux à ouverture octogonale (contour à 8 oxygènes).

La mordénite, utilisée comme base du catalyseur employé dans le procédé d'isomérisation de n-paraffines selon la présente invention peut être également une mordénite désaluminée suivant les méthodes connues de l'homme du métier. Le rapport atomique Si/Al de la mordénite utilisée est habituellement d'environ 5 à environ 50, bien que des mordénites ayant un rapport atomique Si/Al plus élevé, par exemple jusqu'à 80 ou même plus, soient également utilisables.

On emploie de préférence une mordénite ayant un rapport atomique Si/Al de 5 à 30.

La mordénite utilisée peut être une mordénite dite à larges pores, de morphologie sphérulite, toujours synthétique, ou une mordénite dite à petits pores, de morphologie en forme d'aiguilles, ayant des canaux "débouchés" telle que celle décrite par exemple dans la demande de brevet français déposée sous le numéro d'enregistrement national 85/05.351 le 5 avril 1985, publiée sous le numéro FR-A-2.579.906 et correspondant à la demande de brevet américaine déposée sous le numéro S.N. 848,547 le 7 avril 1986 et S.N. 001.151 "Continuation in part" déposée le 7 janvier 1987. Dans tous les cas la mordénite, pour être utilisable dans le procédé selon l'invention, doit pouvoir adsorber des molécules de diamètre cinétique supérieur à environ 6,6 x 10$^{-10}$m (6,6 Angströms) telle que le benzène. La mordénite, qu'elle soit synthétique on naturelle, est au départ sous forme sodique et contient habituellement entre 4 et 6,5% en poids de sodium par rapport au poids de mordénite sèche ; il est ainsi nécessaire d'effectuer sa mise sous forme acide, par tout procédé connu de l'homme du métier permettant d'obtenir une mordénite sous forme acide ayant une teneur en sodium inférieure à environ 0,2 % en poids et de manière préférée inférieure à environ 0,1 % en poids par rapport au poids de mordénite sèche. Par mordénite sous forme acide on désigne, dans la présente invention, une mordénite contenant moins d'environ 0,2 % poids et de préférence moins d'environ 0,1 % poids de cations alcalins et alcalino-terreux exprimés en équivalent poids de sodium par rapport au poids de la mordénite sèche. La mordénite utilisée doit également avoir un volume de maille, V, de la maille élémentaire de 2,63 à 2,78 nanomètre cube (nm$^3$) et de préférence de 2,74 à 2,77 nm$^3$ et sa capacité d'adsorption de benzène doit être d'au moins 5 % et de préférence au moins 8 % poids par rapport au poids mordénite sèche.

La mordénite ainsi définie est utilisée pour préparer le catalyseur, soit seule, soit mélangée intimement à une matrice, habituellement amorphe, par exemple à une poudre humide d'un gel d'alumine. Le mélange est ensuite mis en forme, par exemple par extrusion au travers d'une filière.

La teneur en mordénite du support ainsi obtenu doit être supérieure à environ 40 % et de préférence supérieure à environ 60 % (en poids). Cette teneur en mordénite est dans ce cas usuellement d'environ 40 à 95 % en poids et de préférence d'environ 60 à 90 % en poids par rapport à l'ensemble mordénite et matrice.

La mise en forme peut être réalisée avec d'autres matrices que l'alumine, telles que, par exemple la silice-alumine, les argiles naturelles (par exemple le kaolin ou la bentonite) et l'alumine-oxyde de bore, et avec une technique autre que l'extrusion telle que, par exemple, le pastillage, la dragéification ou tout autre technique connue de l'homme du métier.

Le métal hydrogénant du groupe VIII est ensuite déposé sur ce support par tout procédé connu de l'homme du métier permettant le dépôt du métal sur la mordénite. Dans le cas du platine, on utilisera un procédé d'échange cationique avec par exemple un complexe tétramine de platine, le métal se déposera alors pratiquement en totalité sur la mordénite. Il est également possible d'introduire le métal du groupe VIII directement sur la mordénite avant son mélange éventuel avec une matrice.

L'utilisation de la technique d'échange cationique peut être appliquée pour déposer le métal soit sur la poudre de mordénite, soit sur un produit déjà mis en forme avec ou sans cation compétiteur ammonium. Sur extrudés ou sur poudre le métal peut également être déposé par la technique dite de l'imprégnation à sec. Le produit séché est ensuite habituellement calciné entre 300 et 600°C.

Le solide ainsi obtenu contient habituellement environ 0,05 à 10 % en poids de métal du groupe VIII. Dans le cas du platine et du palladium la teneur (en poids) est usuellement d'environ 0,05 à 1 % et de préférence d'environ 0,1 à 0,6 %. Dans le cas du nickel la teneur pondérale est usuellement d'environ 0,1 à 10 % et de préférence d'environ 0,2 à 5 %.

Le solide à base de mordénite sous forme acide contenant au moins un métal du groupe VIII est alors soumis à un traitement d'oxychloration comprenant sa mise en contact avec du chlore et/ou au moins un composé chloré en présence d'un gaz contenant de l'oxygène et de la vapeur d'eau, à une température d'environ 200 à 500°C et de préférence d'environ 300 à 480°C, le chlore et/ou le composé étant utilisé en une quantité représentant au total d'environ 0,5 à 10 % poids calculé en poids de chlore par rapport au poids de mordénite et de préférence d'environ 1 à 5 % poids.

L'opération d'oxychloration du solide à base de mordénite peut être effectuée "hors site" ou "ex situ" ou encore "in situ" ou "en site".

Par traitement "in situ" on désigne un traitement qui est effectué en tête de la (ou des) zone(s) dans laquelle sera effectuée la réaction proprement dite d'isomérisation ou dans une (ou des) zone(s) plus ou moins en communication directe avec ladite zone d'isomérisation.

Par traitement "ex situ" on désigne un traitement qui est effectué soit à proximité du site de l'unité industrielle d'isomérisation, dans une zone qui ne se trouve pas au voisinage immédiat de la zone d'isomérisation, soit à distance plus ou moins grande géographiquement de l'unité industrielle (là où le solide a été fabriqué par exemple).

Le traitement d'oxychloration consiste habituellement à chauffer le solide, comprenant au moins un métal du groupe VIII déposé sur la mordénite acide, en présence d'un courant gazeux contenant de l'oxygène et de la vapeur d'eau, par exemple de l'air humide ou de l'oxygène dilué par un gaz inerte, la teneur en oxygène du mélange gazeux étant usuellement d'environ 10 à 50 % et de préférence d'environ 15 à 35 % en poids et sa teneur pondérale en eau étant usuellement de 0,01 à 5 % et de préférence 0,03 à 4 % et de façon souvent avantageuse d'environ 0,05 à 1 %. Le chauffage en présence du mélange gazeux contenant de l'oxygène et de l'eau est usuellement effectué de manière progressive jusqu'à la température choisie. La température augmente par exemple d'environ 5°C par minute jusqu'à la température choisie.

On introduit alors dans le courant gazeux d'oxygène et de vapeur d'eau, maintenu à la température choisie, du chlore (Cl$_2$) et/ou au moins un composé chloré par exemple l'acide chlorhydrique (HCl) ou un composé chloré organique tel que le tétrachlorure de carbone, le dichloropropane, le dichloroéthane ou le chloroforme.

Le débit d'injection du chlore ou du composé chloré est habituellement calculé de manière à ce que la durée nécessaire à l'injection de la quantité choisie de chlore soit d'environ 0,5 à 6 heures et de préférence d'environ une heure et demie à environ 2 heures. Lorsque l'introduction du chlore est terminée, le catalyseur est alors habituellement refroidi, en présence du courant gazeux contenant de l'oxygène et de la vapeur d'eau décrit ci-dessus, jusqu'à la température ambiante.

La teneur en chlore résiduel sur le catalyseur n'excède habituellement pas 50 % en poids et souvent n'excède pas 30 % en poids de la masse de chlore injecté. A cette teneur, le chlore n'est pas préjudiciable à la structure de la mordénite : c'est-à-dire que la structure de la mordénite n'est pas sensiblement modifiée.

Avant le traitement d'oxychloration, on observe sur le solide, par microscopie électronique, des cristallites métalliques (par exemple de Platine) dont la répartition en taille est tout à fait hétérogène. Les plus petites, qui sont certainement en très faible quantité sont inférieures à la limite de détection de la microscopie électronique ($7 \times 10^{-10}$m), et les plus grosses, qui sont facétées et regroupées en amas ont des tailles pouvant aller jusqu'à $2 \times 10^{-7}$m (2000 Angströms).

Après le traitement d'oxychloration, la répartition en taille des cristallites de métal sur la mordénite est beaucoup plus homogène. Le nombre de cristallites observables en microscopie électronique a fortement diminué, ce qui montre que la majorité d'entre elles ont une taille inférieure à la limite de détection de l'appareillage utilisé qui est de $7 \times 10^{-10}$m (7 Angströms).

Les tailles de particules données plus haut, ont été mesurées à l'aide d'un microscopie électronique à haute résolution. Le catalyseur, destiné à être observé par microscopie électronique à transmission est broyé dans un mortier en agate, puis mis en suspension dans de l'éthanol par ultrasons. Une goutte de cette suspension est ensuite déposée sur une grille de cuivre recouverte d'un mince film de carbone à trou. Après un bref séchage, l'échantillon est observé par la technique dite du champ clair.

Le catalyseur obtenu par le traitement d'oxychloration est habituellement soumis à une réduction par un gaz contenant au moins un composé réducteur avant d'être mis en contact avec la charge d'hydrocarbures et l'hydrogène dans les conditions de l'isomérisation. Le composé réducteur employé est usuellement de l'hydrogène. On utilise de préférence comme gaz contenant au moins un composé réducteur, de l'hydrogène industriel. On peut également utiliser de l'hydrogène essentiellement pur, c'est-à-dire contenant moins de 0,5 % en volume et de préférence moins de 0,1 % en volume d'impuretés.

Cette réduction est habituellement effectuée par palier jusqu'à une température de 350 à 750°C et de préférence de 400 à 600°C pendant un temps suffisant pour que les concentrations en composés réducteurs soient les mêmes à l'entrée et à la sortie du réacteur, ce qui prouve que la réduction, dans les conditions choisies, est terminée. Cette étape de réduction est de préférence réalisée "in situ".

Suivant l'invention, la charge riche en paraffines légères, par exemple à 5 et/ou 6 atomes de carbone, et l'hydrogène sont mis en contact avec un catalyseur oxychloré du type décrit ci-dessus dans les conditions de l'isomérisation. Ce contact peut s'effectuer en utilisant le catalyseur en lit fixe, en lit fluidisé ou en batch (c'est-à-dire en discontinu).

L'étape d'isomérisation du procédé selon l'invention est habituellement effectuée à une température de 200 à 350°C et de préférence de 230 à 300°C, à des pressions partielles d'$H_2$ comprises entre la pression atmosphérique (0,1 MPa) et 7 MPa et de préférence entre 0,5 MPa et 5 MPa. La vitesse spatiale peut être comprise entre 0,1 et 20 litres d'hydrocarbures liquides par litre de catalyseur et par heure et de préférence entre 1 et 10. Le rapport molaire $H_2$/charge peut varier entre de larges limites et est compris normalement entre 0,2 et 20 et de préférence entre 0,5 et 10. L'isomérisation étant une réaction équilibrée, l'isomérisat contient encore une quantité importante de n-paraffines non converties. Ces paraffines peuvent être séparées des isomères par exemple par distillation ou par fractionnement sur tamis moléculaire et recyclées dans l'unité d'isomérisation.

La coupe d'hydrocarbures utilisée contient généralement au moins 80 % poids et de préférence au moins 90 % poids de n-paraffines à 4, 5, 6 ou 7 atomes de carbone.

Les coupes d'hydrocarbures qui sont préférentiellement traitées sont celles qui contiennent au moins 80 % en poids d'hydrocarbures à 5 et/ou 6 atomes de carbone et mieux au moins 90 % en poids des dits hydrocarbures.

L'équilibre thermodynamique entre les différents isomères varie énormément avec la température. Les hydrocarbures ramifiés, qui sont ceux qui ont un indice d'octane élevé, sont d'autant plus favorisés que la température est plus basse. Le problème de l'isomérisation des n-paraffines consiste donc à trouver des catalyseurs actifs à la plus basse température possible. Le nombre de moles de diméthyl-2,2-butane, (22 DMC4), dont l'indice d'octane est l'un des plus élevé parmi les isomères en $C_6$, ne peut dépasser, à une température donnée, sa valeur à l'équilibre thermodynamique : Chimie des hydrocarbures par G.Lefebvre Editions Technip 1978, pages 89 à 91 et US-A-4238319 (colonne 1 lignes 20 à 66). L'approche à l'équilibre en pourcentage pour le 22 DMC4 définie comme le nombre de moles de 22DMC4 dans l'effluent de la réaction (encore appelée la recette) multiplié par cent et divisé par le nombre de moles de 22DMC4 à l'équilibre thermodynamique, à la température considérée, est une mesure permettant de comparer facilement les activités relatives des catalyseurs.

Les exemples suivants, définissent l'invention sans en limiter la portée.

Les performances des catalyseurs sont définies par la conversion (C) du n-hexane, la sélectivité (S) en isomérisation, l'approche à l'équilibre (Ap) sur le diméthyl-2, 2-butane et par l'indice d'octane recherche (IO).

EP 0 256 945 B1

$$\text{Conversion (C\%)} = \frac{(\text{Masse de n-hexane entrée} - \text{masse de n-hexane sortie}) \times 100}{\text{Masse de n-hexane entrée}}$$

$$\text{Sélectivité (S\%)} = \frac{(\text{Somme Masse des isomères}) \times 100}{(\text{Somme Masse des produits de la réaction})}$$

$$\text{Approche à l'équilibre (Ap\%)} = \frac{(\text{Nombre de moles de 22DMC4 dans la recette}) \times 100}{\text{Nombre de moles de 22DMC4 à l'équilibre}}$$

EXEMPLE 1: Préparation du catalyseur A (comparaison)

La matière première est une mordénite petits pores référence Alite 150 de la Société Chimique de la Grande Paroisse. Sa formule chimique à l'état anhydre est : Na $AlO_2(SiO_2)_{5,5}$, et sa capacité d'adsorption de benzène est de 1 % en poids par rapport au poids de solide sec (volume de maille : 2,79 $nm^3$ ; teneur en sodium 5,3 % (poids), diamètre cinétique des molécules adsorbées : 3,8 x $10^{-10}$m) ; 50 g de cette poudre sont plongés dans une solution 2M de nitrate d'ammonium et la suspension est portée à 95°C pendant deux heures.

Le volume de la solution de nitrate d'ammonium engagée est égal à 4 fois le poids de zéolithe sèche (V/P = 4). Cette opération d'échange cationique est recommencée 3 fois. Après le 3éme échange, le produit est lavé à l'eau, à 20°C pendant 20 minutes avec un rapport V/P égal à 4. La teneur en sodium, exprimée en pourcentage en poids par rapport au poids de solide sec passe de 5,5 à 0,1 %. Le produit est ensuite filtré et soumis à une calcination en atmosphère confinée (self steaming) à 600°C pendant 2 heures.

On procède ensuite à une attaque acide avec de l'acide chlorhydrique 0,58N, en portant le produit à reflux dans la solution aqueuse d'acide chlorhydrique à 90°C pendant 2 heures avec un rapport V/P égal à 8. Le produit est ensuite filtré, lavé à l'acide chlorhydrique 0,1N puis à l'eau.

Le rapport atomique Si/Al de cette mordénite est égal à 12, son volume de maille à 2,750 $nm^3$, son taux de sodium à 300 ppm et sa capacité d'adsorption de benzène à 9,6 % poids par rapport au poids de solide sec. La morphologie de cette mordénite est en forme d'aiguilles de longueurs moyennes 5 x $10^{-6}$m dont les faces sont hexagonales et ont une longueurs d'environ 1 x $10^{-6}$m et une hauteur d'environ 0,3 x $10^{-6}$m. Cette mordénite ainsi modifée est ensuite malaxée avec un liant aluminique, puis ce mélange, contenant 25 % poids d'alumine est forcé au travers d'une filière. Les extrudés de diamètre 1,2 x $10^{-3}$m sont ensuite séchés et calcinés.

0,4 % de platine sont ensuite déposés sur le support obtenu ci-dessus par échange cationique à partir de chlorure de platine tétrammine $Pt(NH_3)_4Cl_2$ avec du nitrate d'ammonium comme ion compétiteur. La quantité de sodium dans le catalyseur final est égale à 80 ppm. Le rapport atomique Si/Al est égal à 12 et le volume de maille à 2,750 $nm^3$. Les extrudés sont ensuite séchés puis calcinés à 500°C.

Le catalyseur ainsi obtenu est chargé dans une unité catalytique en lit fixe et réduit sous hydrogène par palier de 2 heures à 150, 250, 350 et 450°C. Il est ensuite testé avec une charge de normal hexane dans les conditions suivantes : température 250°C, pression 30 bars, poids de n-hexane par unité de poids de mordénite et par heure : 2, rapport molaire hydrogène sur normal hexane : 2. Les performances indiquées dans le tableau I sont prises après 30 h de mise en régime du catalyseur.

EXEMPLE 2 : Catalyseur B conforme à l'invention

Le catalyseur A décrit dans l'exemple 1 est chargé dans l'unité catalytique, puis est oxychloré comme suit:
- montée en température depuis la température ambiante jusqu'à 400°C en une heure et demie sous un courant d'air contenant de l'ordre de 1000 ppm en poids d'eau,
- injection de chlore dans l'air humide maintenu à 400°C sous forme de tétrachlorure de carbone de manière à introduire 2 % en poids de chlore par rapport à la mordénite en une heure et demie,
- descente progressive jusqu'à température ambiante sous courant d'air humide.

La structure de la mordénite n'a pas été modifiée par le traitement d'oxychloration. La teneur en chlore du catalyseur B obtenu, est de l'ordre de 0,6 % poids.

Le catalyseur B, ainsi obtenu est ensuite réduit sous hydrogène par palier de 2 heures à 150, 250, 350 et 450°C, puis testé avec une charge de n-hexane dans les conditions énoncées dans l'exemple 1.

Les performances obtenues sont reportées dans le tableau I et comparées aux performances du catalyseur A (non oxychloré).

Le catalyseur B selon l'invention présente une conversion accrue (faiblement vu la proximité de l'équilibre) mais c'est surtout au niveau du 22DMC4 isomère dibranché présentant un indice d'octane élevé, et donc au niveau de l'indice d'octane, que l'amélioration est la plus sensible.

5

EXEMPLE 3 : Catalyseur C (comparaison)

Dans cet exemple la mordénite n'est pas échangée, et est utilisée sous sa forme sodique.

La mordénite sous forme NaM est calcinée sous gaz inerte à une température de 500°C pendant 2 heures environ afin d'éliminer l'eau qu'elle contient. On laisse ensuite descendre la température jusqu'à 350°C, toujours sous gaz inerte. On envoie ensuite sur la mordénite le gaz inerte barbotant dans un piège qui contient du tétrachlorure de silicium liquide à 20°C. La température s'élève alors jusqu'à 380°C. On laisse balayer la mordénite 40 minutes avec ce gaz inerte saturé en $SiCl_4$ puis environ 1 heure avec le gaz inerte pur. La descente à température ambiante se fait sous gaz inerte pur.

Le solide est ensuite lavé deux fois à 50°C avec un rapport V/P (volume d'eau sur poids de produit sec) égal à 10 afin d'éliminer le chlorure de sodium produit lors de la réaction. La mordénite ainsi obtenue, sous forme sodium (NaM), non acide, a un rapport Si/Al égal à 11. Cette mordénite est ensuite malaxée avec un liant aluminique, à raison de 25 % poids du liant. Le mélange est ensuite forcé au travers d'une filière. Les extrudés de diamètre $1,2 \times 10^{-3}$m sont ensuite séchés et calcinés.

0,4 % de platine sont ensuite déposés sur ce support, par échange cationique à partir de chlorure de platine tétrammine $Pt(NH_3)_4Cl_2$, avec du nitrate d'ammonium comme ion compétiteur. Les extrudés sont ensuite séchés puis calcinés à 500°C.

Le catalyseur ainsi obtenu est chargé dans l'unité catalytique puis oxychloré de la manière décrite dans l'exemple 2 : réduit sous hydrogène par palier de 2 heures à 150, 250, 350 et 450°C puis testé avec une charge de n-hexane dans les conditions énnoncées dans l'exemple 1. Les performances sont très inférieures à celles du catalyseur B de l'exemple 2. Les performances sont données dans le tableau I ci-après.

Exemple 4 : Catalyseur D

Le catalyseur A décrit dans l'exemple 1 est chargé dans l'unité catalytique, puis est oxychloré suivant le mode opératoire décrit dans l'exemple 2, si ce n'est que le courant d'air utilisé contient de l'ordre de 170 ppm en poids d'eau (au lieu de 1000 ppm). La structure de la mordénite n'a pas été modifiée par le traitement d'oxychloration. La teneur en chlore du catalyseur D obtenu est de l'ordre de 0,6 % poids.

Ce catalyseur est ensuite réduit sous hydrogène par palier de 2 heures à 150, 250, 350 et 450°C, puis testé avec une charge de n-hexane dans les conditions énoncées dans l'exemple 1.

Les performances obtenues sont reportées dans le tableau 1 et comparées aux performances des catalyseurs A (non oxychloré) et B (oxychloré avec une teneur en eau supérieure).

Le catalyseur D présente des performances légèrement supérieures à celles du catalyseur A, non oxychloré, mais inférieures à celles du catalyseur B, oxychloré suivant le mode préféré de réalisation de l'invention.

Exemple 5 : Catalyseur E (comparaison)

On prépare un catalyseur à partir de la mordénite décrite dans l'exemple 1, en suivant le mode opératoire décrit dans l'exemple 1, si ce n'est que la solution de nitrate d'ammonium utilisée est une solution molaire (1 M) de nitrate d'ammonium. Après l'échange le solide est filtré, calciné, puis soumis à une attaque acide dans les mêmes conditions que dans l'exemple 1. Le produit ainsi obtenu a une teneur en sodium de 0,5 % en poids, un rapport atomique Si/Al de 12, un volume de maille de 2,77 $nm^3$, une capacité d'adsorption de benzène de 9,6 poids par rapport au poids de solide sec.

La morphologie de ce produit est en forme d'aiguilles. On procède ensuite comme dans l'exemple 1 pour obtenir un produit calciné contenant de l'alumine, la mordénite et 0,4 % poids de platine. Ce produit est oxychloré suivant le mode opératoire décrit dans l'exemple 2, en utilisant un courant d'air contenant de l'ordre de 1000 ppm en poids d'eau. Le traitement d'oxychloration n'a pas modifié la structure de la mordénite, la teneur en chlore du produit obtenu appelé catalyseur E est de l'ordre de 0,6 % poids.

Ce catalyseur est ensuite réduit sous hydrogène par paliers de 2 heures à 150, 250, 350 et 450°C puis testé avec une charge de n.hexane dans les conditions énoncées dans l'exemple 1.

Les performances obtenues sont reportées dans le tableau I et comparées aux performances du catalyseur B (contenant une teneur en sodium inférieure à celle du catalyseur E).

Les performances du catalyseur E sont très inférieures à celles du catalyseur B obtenu suivant le mode préféré de réalisation de l'invention et sont également inférieures à celles du catalyseur D.

6

Tableau I

| Catalysateur | C % | S % | Ap % | IO |
|---|---|---|---|---|
| A | 79,5 | 98,6 | 54,7 | 67 |
| B | 81,0 | 98,0 | 66,9 | 69,9 |
| C | 38,0 | 99,0 | 7,3 | 34,0 |
| D | 80 | 98,4 | 59,3 | 67,5 |
| E | 51,2 | 96,1 | 34,2 | 45,1 |

Ces résultats montrent la nette supériorité du catalyseur B selon l'invention pour le procédé d'isomérisation des n-paraffines et en particulier fait apparaître une amélioration de la conversion et de l'indice d'octane, et une très nette amélioration de la valeur de l'approche à l'équilibre du 22DMC4.

## Revendications

1 - Catalyseur d'isomérisation d'une coupe d'hydrocarbures riche en n-paraffines caractérisé en ce qu'il est le produit résultant d'une oxychloration d'une solide renfermant au moins un métal du groupe VIII, de la classification périodique des éléments, supporté par une mordénite sous forme acide, la dite mordénite ayant une teneur en cations alcalins et alcalino-terreux exprimée en équivalent poids de sodium inférieure à 0,2 % en poids par rapport au poids de la mordénite séche, adsorbant des molécules de diamètre cinétique supérieur à environ $6,6 \times 10^{-10}$m, ayant un volume de maille, V, de la maille élémentaire de 2,73 à 2,78 nm$^3$ et une capacité d'adsorption de benzène supérieure à 5 % poids par rapport au poids de mordénite sèche ladite oxychloration étant effectuée à une température d'environ 200 à 500°C à l'aide d'un mélange gazeux contenant de l'oxygène, de l'eau, et du chlore et/ou au moins un composé chloré, la quantité de chlore ou de composé chloré employée représentant au total de 0,5 à 10 % poids, calculé en poids de chlore par rapport au poids de mordénite.

2 - Catalyseur selon la revendication 1 dans lequel la mordénite acide est une mordénite ayant un rapport Si/Al d'environ 5 à environ 50.

3 - Catalyseur selon la revendication 1 ou 2 dans lequel le mélange gazeux utilisé pour l'oxychloration est de l'air humide additionné de chlore et/ou d'au moins un composé chloré.

4 - Catalyseur selon l'une des revendications 1 à 3 dans lequel l'oxychloration est effectuée par mise en contact du solide avec un gaz contenant de l'oxygène, et de 0,01 à 5 % en poids d'eau, et chauffage jusqu'à une température d'environ 300 à 480°C, puis introduction dans le mélange gazeux du chlore et/ou du composé chloré en quantité représentant au total de 1 à 5 % poids, calculé en poids de chlore par rapport au poids de mordénite.

5 - Catalyseur selon l'une des revendications 1 à 4 dans lequel on emploie pour l'oxychloration du chlore et/ou un composé chloré choisi dans le groupe formé par l'acide chlorydrique, le tétrachlorure de carbone, le dichloropropane, le dichloroéthane et le chloroforme.

6 - Catalyseur selon l'une des revendications 1 à 5 dans lequel le métal du groupe VIII est choisi dans le groupe formé par le platine, le palladium et le nickel.

7 - Catalyseur selon l'une des revendications 1 à 6 dans lequel le solide renferme en outre une matrice, en quantité telle que la quantité de mordénite représente au moins 40 % en poids par rapport au poids de l'ensemble mordénite et matrice.

8 - Catalyseur selon la revendication 7 dans lequel la matrice est l'alumine.

9 - Catalyseur selon l'une des revendications 1 à 8 dans lequel le solide renferme de 0,05 à 1 % en poids de métal dans le cas du platine ou du palladium et de 0,1 à 10 % en poids de métal dans le cas du nickel.

10 - Utilisation d'un catalyseur selon l'une des revendications 1 à 9 dans les réactions d'hydroisomérisation d'une coupe riche en n-paraffines ayant de 4 à 7 atomes de carbone par molécule.

## Claims

1. A catalyst for the isomerization of a hydrocarbon cut of high n-parrafins content characterized in that it is obtained by oxychlorination of a solid containing at least one group VIII metal of the periodic classification of elements, supported by a mordenite in acid form, said mordenite having a content of alkali and alkaline-earth cations, expressed in sodium weight equivalent, lower than 0.2% by weight with respect to the dry mordenite weight, adsorbing molecules of kinetic diameter higher than about $6.6 \times 10^{-10}$m, having a mesh volume V of the elementary mesh from 2.73 to 2.78 nm$^3$ and a benzene adsorption capacity higher than 5% by weight in proportion to the dry mordenite weight, said oxychlorination being conducted at a temperature from about 200 to 500°C by means of a gas mixture containing oxygen, water and chlorine and/or at least one chlorinated compound, the chlorine or chlorinated compound amounting to a total of 0.5–10% by weight, calculated as chlorine weight in proportion to the mordenite weight.

2. A catalyst according to claim 1, wherein the acid mordenite is a mordenite whose Si/Al ratio ranges from about 5 to about 50.

3. A catalyst according to claim 1 or 2, wherein the gas mixture used for the oxychlorination consists of wet air with chlorine and/or at least one chlorinated compound added thereto.

4. A catalyst according to one of claims 1 to 3, wherein the oxychlorination is performed by contacting the solid with a gas containing oxygen and 0.01–5% by weight of water, heating up to a temperature of about 300–480°C, then introducing the chlorine and/or chlorinated compound in the gas mixture in an amount corresponding to a total of 1–5% by weight, calculated as chlorine weight, in proportion to the mordenite weight.

5. A catalyst according to one of claims 1 to 4, wherein the oxychlorination is performed with chlorine and/or a chlorinated compound selected from the group formed by hydrochloric acid, carbon tetrachloride, dichloropropane, dichloroethane and chloroform.

6. A catalyst according to one of claims 1 to 5, wherein the group VIII metal is selected from the group formed by platinum, palladium and nickel.

7. A catalyst according to one of claims 1 to 6, wherein the solid further contains a matrix, in such an amount that the mordenite proportion in the total mordenite and matrix amount is at least 40% by weight.

8. A catalyst according to claim 7, wherein the matrix is alumina.

9. A catalyst according to one of claims 1 to 8, wherein the solid contains 0.05–1% by weight of metal in the case of platinum or palladium or 0.1–10% by weight of metal in the case of nickel.

10. The use of a catalyst according to one of claims 1 to 9 in the reactions of hydroisomerization of a cut comprising a high proportion of n-paraffines having 4–7 carbon atoms per molecule.

## Patentansprüche

1. Isomerisierungskatalysator für Kohlenwasserstoffchargen, die reich an n-Paraffinen sind, dadurch gekennzeichnet, daß er das Produkt ist, das resultiert aus einer Oxichlorierung eines Feststoffes enthaltend wenigstens ein Metall der Gruppe VIII des Periodensystems der Elemente, getragen durch ein Mordenit in Säureform, wobei der genannte Mordenit einen Gehalt an Kationen der Alkali- und Erdalkalimetalle besitzt, ausgedrückt in Gewichtsäquivalenten von Natrium der kleiner ist als 0,2 Gew.-% bezogen auf das Gewicht des trockenen Mordenits, daß er Moleküle vom kinetischen Durchmesser größer als ungefähr $6,6 \times 10^{-10}$ m adsorbiert, daß er ein Maschenvolumen V besitzt von Elementarmaschen, Poren von 2,73 bis 2,78 nm³ und eine Adsorptionskapazität für Benzol, die größer ist als 5 Gew.-% mit Bezug auf das Gewicht des trockenen Mordenits, wobei die genannte Oxichlorierung durchgeführt wird bei einer Temperatur von etwa 200 bis 500°C mit Hilfe eines gasförmigen Gemisches enthaltend Sauerstoff, Wasser, Chlor und/oder wenigstens eine chlorierte Verbindung, wobei die Menge von Chlor oder von verwendeter chlorierter Verbindung insgesamt von 0,5 bis 10 Gew.-% darstellen, berechnet als Gewicht von Chlor bezüglich des Gewichts des Mordenits.

2. Katalysator gemäß Anspruch 1, in welchem der saure Mordenit ein Mordenit ist mit einem Si/Al-Verhältnis von etwa 5 bis etwa 50.

3. Katalysator gemäß Anspruch 1 oder 2, in welchem das für die Oxichlorierung verwendete gasförmige Gemisch feuchte Luft ist, der Chlor und/oder wenigstens eine chlorierte Verbindung zugefügt ist.

4. Katalysator gemäß einem der Ansprüche 1 bis 3, in welchem die Oxichlorierung durchgeführt wird durch Kontaktierung von Feststoff mit einem Gas, das Sauerstoff enthält und von 0,01 bis 5 Gew.-% Wasser, und Erhitzung bis auf eine Temperatur von etwa 300 bis 480°C, dann Einführung in das gasförmige Gemisch von Chlor und/oder chlorierter Verbindung in einer Menge, die insgesamt von 1 bis 5 Gew.-% darstellt, berechnet als Gewicht an Chlor bezüglich des Gewichts des Mordenits.

5. Katalysator gemäß einem der Ansprüche 1 bis 4, in welchem man für die Oxichlorierung Chlor und/oder eine chlorierte Verbindung verwendet, gewählt in der Gruppe gebildet durch Chlorwasserstoffsäure, Tetrachlorkohlenstoff, Dichlorpropan, Dichlorethan und Chloroform.

6. Katalysator gemäß einem der Ansprüche 1 bis 5, in welchem das Metall der Gruppe VIII gewählt ist in der Gruppe gebildet durch Platin, Palladium und Nickel.

7. Katalysator gemäß einem der Ansprüche 1 bis 6, in welchem der Festkörper unter anderem eine Matrix umfaßt, in einer Menge, daß die Menge an Mordenit wenigstens 40 Gew.-% darstellt, bezüglich des Gewichts der Gesamtheit von Mordenit und Matrix.

8. Katalysator gemäß Anspruch 7, in welchem die Matrix Aluminiumoxid ist.

9. Katalysator gemäß einem der Ansprüche 1 bis 8, in welchem der Feststoff von 0,05 bis 1 Gew.-% Metall umfaßt im Falle des Platins oder Palladiums und von 0,1 bis 10 Gew.-% Metall im Falle des Nickels.

10. Verwendung eines Katalysators gemäß einem der Ansprüche 1 bis 9, bei Reaktionen der Hydroisomerisierung einer Charge, die reich an n-Paraffinen mit 4 bis 7 Kohlenstoffatomen pro Molekül ist.